# EUROPÄISCHE PATENTSCHRIFT

(11) **EP 1 420 507 B1**
(45) Veröffentlichungstag und Bekanntmachung des Hinweises auf die Patenterteilung: **09.01.2008**
(21) Anmeldenummer: 02025776.2
(22) Anmeldetag: 16.11.2002
(51) Int. Cl.: H02K 21/14, H02K 5/173, H02K 3/30

(54) **Miniaturmotor mit dauermagnetischem Läufer**
Miniature motor with permanent magnetic rotor
Moteur miniature avec rotor aux aimants permanents

(43) Veröffentlichungstag der Anmeldung: 19.05.2004
(73) Patentinhaber: MINEBEA Co., Ltd., Kitasaku-gun, Nagano-ken (JP)
(72) Erfinder: Barrho, Günther, 78647 Trossingen (DE); Würfel, Peter, 78056 Villingen-Schwenningen (DE)
(74) Vertreter: Hoeger, Stellrecht & Partner Patentanwälte

(56) Entgegenhaltungen:
- WO-A-97/30794
- US-A- 3 790 834
- US-A- 5 112 649
- US-A- 5 523 634
- US-A- 5 663 601
- US-B1- 6 242 096
- PATENT ABSTRACTS OF JAPAN vol. 014, no. 479 (E-0992), 18. Oktober 1990 (1990-10-18) -& JP 02 197243 A (SAILOR PEN CO LTD:THE;OTHERS: 01), 3. August 1990 (1990-08-03)
- PATENT ABSTRACTS OF JAPAN vol. 016, no. 579 (E-1299), 18. Dezember 1992 (1992-12-18) -& JP 04 229065 A (FUJI ELECTRIC CO LTD), 18. August 1992 (1992-08-18)

## Beschreibung

Die Erfindung betrifft eine elektrische Maschine mit einem Gehäuse, mit mindestens einem mit magnetisierten Bereichen versehenen und um eine Rotorachse im Gehäuse drehbar gelagerten Rotor, und mit einem mindestens eine Statoreinheit aufweisenden Stator, wobei jede Statoreinheit zwei Polschuhelemente aufweist, von denen ein erstes Polschuhelement einen sich quer zur Rotorachse erstreckenden und auf einer dem Rotor zugewandten Seite der Spule angeordneten ersten Polschuhträger sowie einen Satz an diesen einstückig angeformte erste als Klauenpole ausgebildete Polschuhe aufweist, welche sich von dem ersten Polschuhträger weg in einer ersten Richtung ungefähr parallel zur Rotorachse erstrecken, und von denen ein zweites Polschuhelement einen sich quer zur Rotorachse erstreckenden und auf einer dem Rotor abgewandten Seite der Spule angeordneten zweiten Polschuhträger sowie einen Satz mit diesem einstückig als Klauenpole ausgebildete zweite Polschuhe aufweist, die sich ebenfalls in der ersten Richtung vom zweiten Polschuhträger weg ungefähr parallel zur Rotorachse über den Rotor hinweg erstrecken, sowie eine in Richtung der Rotorachse auf den Rotor folgend angeordnete und um die Rotorachse herum verlaufend, gewickelte Spule umfasst, mit welcher die ersten und zweiten Polschuhe magnetisierbar sind.

Derartige Maschinen sind aus Patent Abstracts of Japan Bd. 014, Nr. 479 (E-0992), 18. Oktober 1990 und JP 02 197243 A bekannt. Diese sind jedoch kostenaufwendig herstellbar.

Der Erfindung liegt daher die Aufgabe zugrunde, eine elektrische Maschine der eingangs beschriebenen Art kostengünstiger zu konzipieren.

Diese Aufgabe wird bei einer elektrischen Maschine der eingangs beschriebenen Art erfindungsgemäß dadurch gelöst, dass die elektrische Maschine ein Elektromotor ist und dass das erste Polschuhelement ein einstückig an den ersten Polschuhträger angeformtes und einen magnetischen Schluss zwischen den Polschuhträgern herstellendes Verbindungselement trägt, welches mit dem zweiten Polschuhträger durch Laserschweißen verschweißt ist.

Der Vorteil der erfindungsgemäßen Lösung ist darin zu sehen, dass damit die Statoreinheit einfach und kostengünstig un trotz der kleinen Abmessungen präzise aufgebaut werden kann.

Besonders vorteilhaft ist es, dass das Verbindungselement mit dem zweiten Polschuhträger verschweißt ist, da mit einer Fügeverbindung in einfacher Weise eine feste und präzise Verbindung zwischen dem Verbindungselement und dem Polschuhträger geschaffen werden kann.

Das erste Polschuhelement mit dem ersten Verbindungselement kann dabei in unterschiedlichster Art und Weise, beispielsweise aus zwei Teilen, hergestellt werden. Eine besonders kostengünstige und einfache Art der Herstellung sieht vor, dass das Verbindungselement durch Tiefziehen an den ersten Polschuhträger angeformt ist und somit besonders kostengünstig herstellbar ist.

Das Verbindungselement könnte prinzipiell aus einzelnen Stegen ausgebildet sein. Besonders zweckmäßig lässt sich das Verbindungselement jedoch dann herstellen, wenn dieses als Hülse ausgebildet ist.
Um die Spule in einfacher Weise in den Stator integrieren zu können, hat es sich als günstig erwiesen, wenn die Hülse einen Wickelkörper für die Spule bildet, so dass die Spule direkt auf die Hülse aufgewickelt werden kann und somit kein weiterer Spulenträger erforderlich ist.

Hinsichtlich der Verbindung des Verbindungselements mit dem zweiten Polschuhträger wurde im Zusammenhang mit den bisherigen Ausführungsbeispielen lediglich festgelegt, dass eine drehfeste Verbindung zwischen diesen erforderlich ist. Beispielsweise ist es dabei denkbar, die drehfeste Verbindung durch einen Formschluss zwischen dem Verbindungselement und dem zweiten Polschuhträger zu realisieren.

Ein Verschweißen des Verbindungselements mit dem zweiten Polschuhträger könnte beispielsweise durch Reibschweißen erfolgen.

Dabei wäre es möglich, eine Reihe von Punktschweißungen vorzusehen. Eine besonders zweckmäßige Art der Schweißung sieht vor, daß eine um die Rotorachse umlaufende Schweißnaht Verwendung findet.

Um eine gute elektrische Isolation zwischen der Spule und dem Verbindungselement sowie dem ersten Polschuhträger zu erreichen, ist vorzugsweise vorgesehen, daß das Verbindungselement und der erste Polschuhträger auf ihrer der Spule zugewandten Seite mit einer elektrisch isolierenden Beschichtung versehen sind, so daß bei direktem Aufwickeln der Spule auf das Verbindungselement keinerlei Gefahr einer später entstehenden elektrischen Verbindung mit dem ersten Polschuhelement, zum Beispiel Masseschluß, besteht.

Vorzugsweise ist vorgesehen, daß auch der zweite Polschuhträger auf seiner der Spule zugewandten Seite mit einer elektrisch isolierenden Beschichtung versehen ist.

Die Beschichtung ist dabei vorzugsweise so ausgebildet, daß sie eine elektrische Durchschlagfestigkeit von 0,5 kV aufweist.

Ferner ist dabei die Beschichtung insbesondere so ausgebildet, daß sie eine Dicke von weniger als 10 µm, noch besser weniger als 5 µm aufweist, um die Toleranzen im Bereich der Statoreinheit nicht negativ zu beeinflussen und um größtmöglichen Bauraum für die Spule zur Verfügung zu stellen.

Eine zweckmäßige Art der Beschichtung sieht vor, daß diese eine glasartige Konsistenz aufweist.

Ferner ist vorzugsweise vorgesehen, daß die Polschuhelemente der Statoreinheit mit einer gegen Korrosion schützenden Beschichtung versehen sind.

Im einfachsten Fall ist die gegen Korrosion schützende Beschichtung dieselbe, wie die elektrisch isolierende Beschichtung.

Hinsichtlich des Verlaufs der zweiten Polschuhe relativ zur Spule wurden bislang keine näheren Angaben gemacht. So sieht eine räumlich besonders günstig bauende Lösung vor, daß die zweiten Polschuhe die Spule übergreifen.

Hinsichtlich der Anordnung der ersten und zweiten Polschuhe relativ zueinander wurden im Zusammenhang mit der bisherigen Erläuterung der einzelnen Ausführungsbeispiele ebenfalls keine näheren Angaben gemacht. So wäre es beispielsweise denkbar, die ersten Polschuhe in einem anderen radialen Abstand von der Rotorachse anzuordnen als die zweiten Polschuhe und beispielsweise den Rotor mit seinen magnetisierten Bereichen zwischen die ersten und zweiten Polschuhe eingreifen zu lassen.

Eine hinsichtlich des erzielbaren Drehmoments besonders günstige Lösung sieht dabei vor, daß die ersten und zweiten Polschuhe auf derselben, um die Rotorachse verlaufenden zylindrischen Fläche liegen und daß die einen Polschuhe in Lücken der anderen Polschuhe angeordnet sind.

Dabei ist vorteilhafterweise vorgesehen, daß in Azimutalrichtung um die Rotorachse jeweils aufeinanderfolgend angeordnete Polschuhe identische Winkelabstände voneinander aufweisen.

Zweckmäßigerweise sind die ersten und zweiten Polschuhe ferner so ausgebildet, daß die ersten und zweiten Polschuhe sich in der ersten Richtung so weit erstrecken, daß deren Enden in einer gemeinsamen, senkrecht zur Rotorachse verlaufenden Ebene liegen.

Hinsichtlich der Lagerung des Rotors relativ zu den Statoreinheiten wurden bislang keine näheren Angaben gemacht. So sieht ein vorteilhaftes Ausführungsbeispiel vor, daß der zweite Polschuhträger der Statoreinheit mit einem Lagerträger verbunden ist, welcher ein Drehlager für den Rotor trägt.

Besonders günstig ist der Lagerträger an der jeweiligen Statoreinheit fixierbar, wenn dieser mit einer Aufnahme in das Verbindungselement eingreift.

Um den erfindungsgemäßen Elektromotor möglichst kostengünstig herzustellen, ist vorzugsweise vorgesehen, daß der Lagerträger aus Kunststoff ausgebildet ist.

Bei dem erfindungsgemäßen Elektromotor wäre es grundsätzlich denkbar, lediglich eine Statoreinheit vorzusehen. Aus Gründen eines möglichst hohen Wirkungsgrades und einer eindeutigen Festlegung der Drehrichtung des Rotors hat es sich als besonders zweckmäßig erwiesen, wenn der Elektromotor einen Stator mit zwei Statoreinheiten und einen Rotor mit jeweils einer der betreffenden Statoreinheit zugeordneten Rotoreinheit aufweist, wobei die Rotoreinheiten auf einer gemeinsamen Motorwelle sitzen.

Dabei könnten die Statoreinheiten so angeordnet sein, daß deren als Klauenpole ausgebildete Polschuhe jeweils in dieselbe Richtung aufweisen. Konstruktiv besonders günstig ist es jedoch, wenn die Statoreinheiten so angeordnet sind, daß deren Polschuhe einander zugewandt sind.

Ferner hat es sich bei einem derart aufgebauten Elektromotor aus Gründen einer möglichst optimalen Raumausnutzung als besonders vorteilhaft erwiesen, wenn bei beiden Statoreinheiten alle Polschuhe auf derselben zylindrischen Fläche um die Rotorachse herum angeordnet sind.

Im besonders günstigen Fall ist aus Gründen einer möglichst kostengünstigen Lösung vorgesehen, daß die beiden Statoreinheiten identisch ausgebildet sind.

Um eine eindeutige Drehrichtung des Elektromotors festzulegen, ist es günstig, wenn durch magnetische Wirkung, d.h. Anziehung, bedingte Haltestellungen der Rotoreinheiten relativ zu den diesen zugeordneten Statoreinheiten relativ zueinander um einen halben Polabstand verdreht sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel eines erfindungsgemäßen Elektromotors;
- Fig. 2: eine vergrößerte Darstellung einer Statoreinheit des ersten Ausführungsbeispiels im Längsschnitt ähnlich Fig. 1 mit Lagerelement;
- Fig. 3: eine Explosionsdarstellung der Statoreinheit gemäß Fig. 2;
- Fig. 4: eine Draufsicht in Richtung des Pfeils A auf die Statoreinheit gemäß Fig. 3 und
- Fig. 5: einen Längsschnitt ähnlich Fig. 1 durch ein zweites Ausführungsbeispiel eines erfindungsgemäßen Elektromotors.

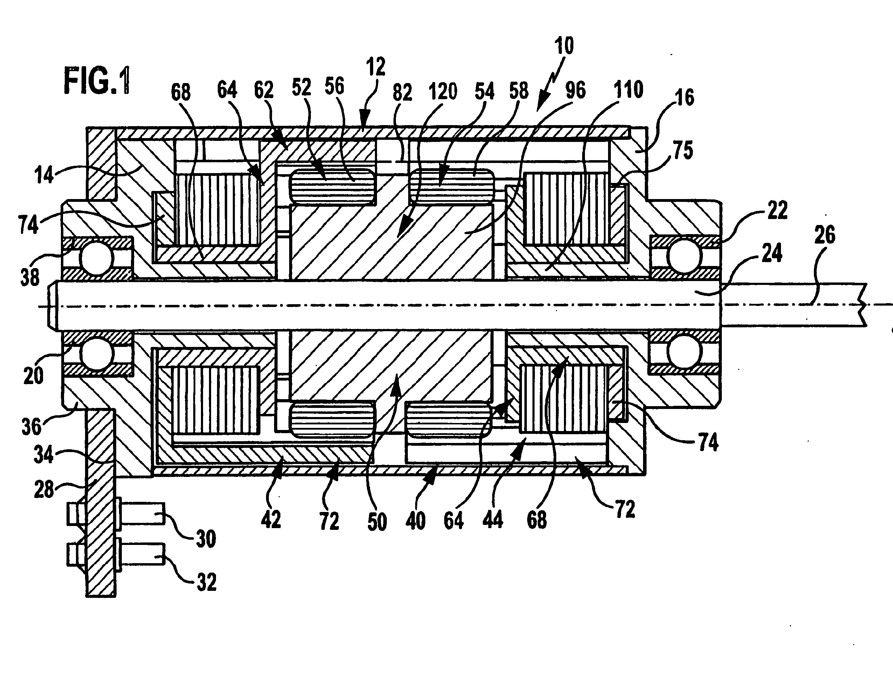

Ein in Fig. 1 dargestelltes erstes Ausführungsbeispiel eines erfindungsgemäßen Elektromotors, vorzugsweise eines Schrittmotors, umfaßt ein Gehäuse 10 mit einem Gehäusemantel 12, der sich zwischen einem ersten Lagerträger 14 und einem zweiten Lagerträger 16 erstreckt, die beide fest mit dem Gehäusemantel 12 verbunden sind.

In jedem der Lagerträger 14 und 16 ist jeweils ein Drehlager 20 bzw. 22, vorzugsweise jeweils ausgebildet als Kugellager, gehalten, mit welchem eine Motorwelle 24 um eine Achse 26 drehbar relativ zum Gehäuse 10 gelagert ist.

Ferner trägt der erste Lagerträger 14 noch eine Anschlußplatine 28, auf welcher elektrische Anschlüsse 30, 32 zur Verbindung mit einer Stromversorgung des Elektromotors angeordnet sind.

Die Anschlußplatine 28 liegt dabei vorzugsweise auf einer Außenfläche 34 des Lagerträgers 14 auf und umschließt einen Haltering 36 des Lagerträgers 14, der seinerseits eine Aufnahme 38 für das Drehlager 20 bildet.

In dem Gehäuse 10 sind sowohl ein Stator 40, gebildet durch zwei identisch ausgebildete und spiegelsymmetrisch zueinander angeordnete Statoreinheiten 42 und 44, sowie ein Rotor 50, gebildet durch zwei Rotoreinheiten 52 und 54, angeordnet, wobei der Rotor 50 mit seinen beiden Rotoreinheiten 52 und 54 auf der Motorwelle 24 drehfest sitzt und somit in gleicher Weise wie die Motorwelle 24 mittels der Drehlager 20 und 22 gegenüber dem Gehäuse 10 um die eine Rotorachse darstellende Achse 26 drehbar gelagert ist. Ferner weist jede der Rotoreinheiten 52, 54 magnetisierte Bereiche 56 bzw. 58 auf.

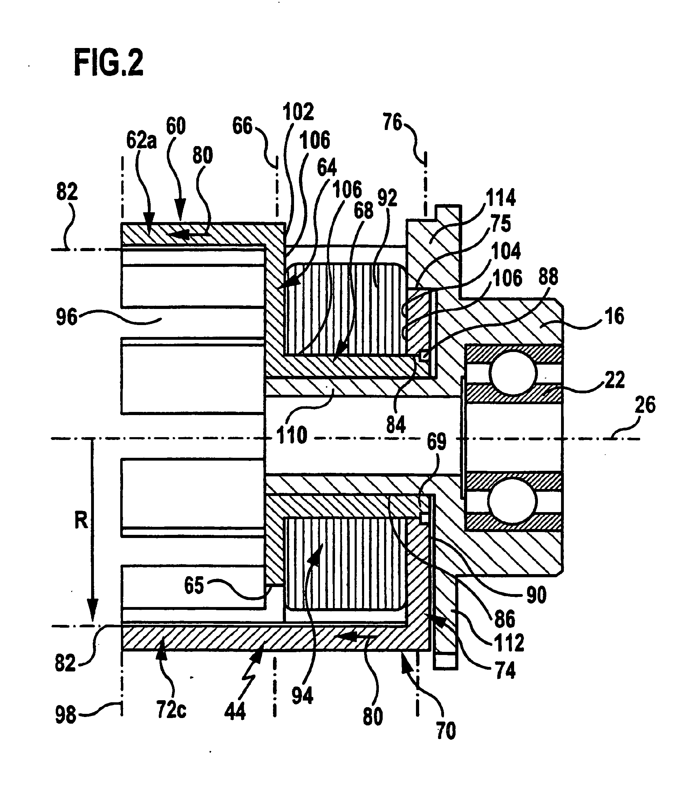

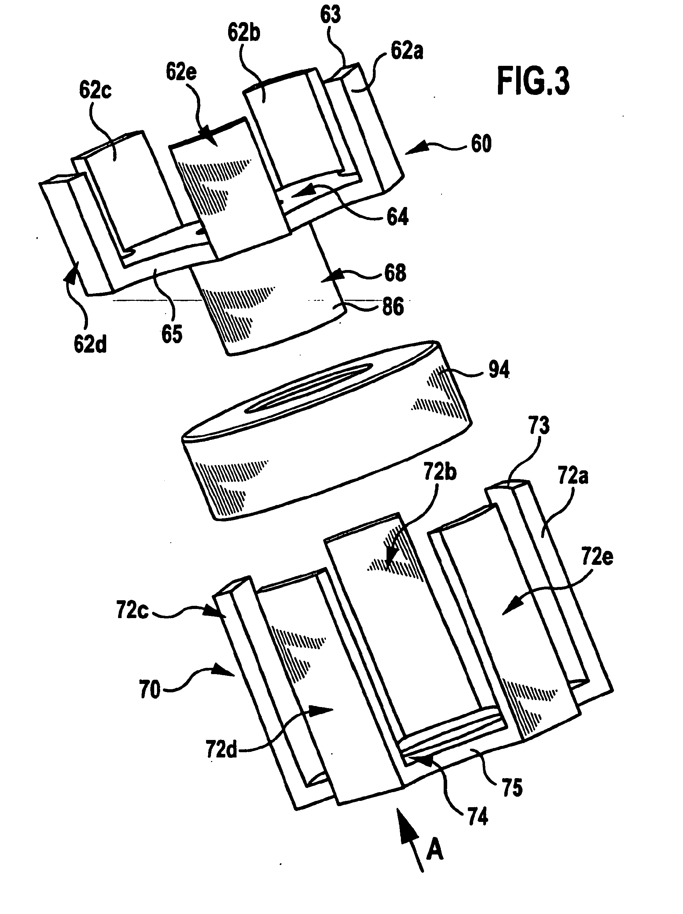

Wie in Fig. 2 und 3 vergrößert dargestellt, umfaßt die Statoreinheit 44 ein erstes Polschuhelement 60, das einen ersten Satz von als Klauenpole ausgebildeten Polschuhen 62 aufweist, die sich ungefähr parallel zur Achse 26 erstrecken.

Der erste Satz von Polschuhen 62 ist dabei einstückig an einen ersten Polschuhträger 64 angeformt, der sich in einer vorzugsweise senkrecht zur Achse 26 verlaufenden Ebene 66 erstreckt.

Ferner ist an den ersten Polschuhträger 64 auf einer den Polschuhen 62 gegenüberliegenden Seite ein Verbindungskörper oder Verbindungselement 68 angeformt, welches sich von dem ersten Polschuhträger 64 weg erstreckt.

Zweckmäßigerweise ist das gesamte Polschuhelement 60 als Tiefziehteil ausgebildet, wobei insbesondere das Verbindungselement 68 durch Tiefziehen an dem Polschuhträger 64 angeformt ist. Das Verbindungselement 68 stellt dabei mit einem dem Polschuhträger abgewandten Ende 69 einen magnetischen Schluß zu einem zweiten Polschuhelement 70 her.

Das zweite Polschuhelement 70 umfaßt einen Satz von zweiten Polschuhen 72a bis 72e, die sich in gleicher Weise wie die ersten Polschuhe 62 ungefähr parallel zu der Achse 26 erstrecken und dabei ebenfalls einstückig an einen zweiten Polschuhträger 74 angeformt sind, welcher sich vorzugsweise in einer Ebene 76 senkrecht zur Achse 26 erstreckt.

Sowohl die ersten Polschuhe 62 als auch die zweiten Polschuhe 72 erstrecken sich ausgehend vom jeweiligen Polschuhträger 64 bzw. 74 jeweils in derselben Richtung 80 und liegen beide vorzugsweise auf einer gemeinsamen zur Achse 26 kreiszylindrisch verlaufenden Hüllfläche 82, so daß diese auch denselben radialen Abstand R von der Achse 26 aufweisen.

Die Polschuhträger 64 und 74 sind dabei in Richtung der Achse 26 gesehen, im Abstand voneinander angeordnet und werden dabei durch das Verbindungselement 68 relativ zueinander fixiert.

Insbesondere ist hierzu der zweite Polschuhträger 74 mit einer Ausnehmung 84 versehen, die ihrerseits auf einer Außenfläche 86 im Bereich des Endes 69 des Verbindungselements 68 aufsitzt, wobei eine umlaufende Schweißnaht 88 eine Fügeverbindung zwischen dem Verbindungselement 68 und dem zweiten Polschuhträger 74 herstellt. Die Schweißnaht 88 ist zweckmäßigerweise im Bereich einer dem ersten Polschuhträger 64 abgewandten Seite 90 des zweiten Polschuhträgers 74 angebracht, und zwar im Bereich der an der Außenfläche 86 anliegenden Ausnehmung 84.

Die Schweißnaht 88 könnte dabei eine umlaufende Naht aus Schweißpunkten sein. Besonders günstig ist es jedoch, wenn die Schweißnaht 88 eine geschlossen umlaufende Schweißnaht ist.

Vorzugsweise wird die Schweißnaht 88 durch Laserschweißen ausgeführt.

Dadurch, daß das Verbindungselement 68 den Polschuhträger 74 im Abstand vom Polschuhträger 64 hält, besteht zwischen diesen Polschuhträgern 64, 74 ein Raum 92, in welchem eine ringförmig um die Achse 26 gewickelte Spule 94 angeordnet ist, die den Raum 92 zwischen den Polschuhträgern 64 und 74 ausfüllt und sich in radialer Richtung von der Außenfläche 86 maximal bis zu den Polschuhen 72 erstreckt, die ausgehend von dem zweiten Polschuhträger 74 über den die Spule 94 aufnehmenden Raum 92 hinweggreifen.

Damit liegt die Spule 94 gegenüber einem durch die als Klauenpole ausgebildeten ersten und zweiten Polschuhe 62, 72 umschlossenen Raum 96 zur Aufnahme der jeweiligen Rotoreinheit, in diesem Fall der Rotoreinheit 54, axial in Richtung der Achse 26 versetzt und weist ferner eine radiale Erstreckung zur Achse 26 auf, die kleiner ist als der Abstand der zweiten Polschuhe 72 von der Rotorachse 26.

Sowohl die ersten Polschuhe 62 als auch die zweiten Polschuhe 72 liegen dabei mit ihren, den jeweiligen Polschuhträgern 64 bzw. 74 abgewandten Enden 63 bzw. 73 in einer Ebene 98, die senkrecht zur Achse 26 verläuft.

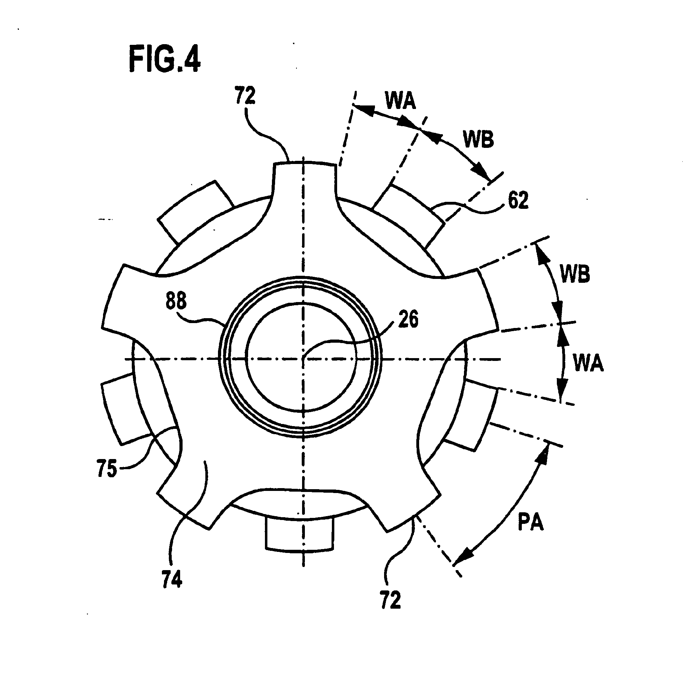

Damit die ersten Polschuhe 62 und die zweiten Polschuhe 72 auf der kreiszylindrischen Fläche 82 liegen können, sind die ersten Polschuhe 62 und die zweiten Polschuhe 72 relativ zueinander auf Lücke angeordnet, das heißt, daß jeweils immer ein zweiter Polschuh 72 mittig zwischen zwei ersten Polschuhen 62 und umgekehrt liegt, wobei sich die Polschuhe 62, 72 in Azimutalrichtung bezüglich der Achse 26 jeweils über denselben Winkelabstand WB erstrecken und außerdem zwischen benachbarten Polschuhen 62, 72 mit einem Polabstand PA jeweils derselbe Winkelabstand WA besteht, wie in Fig. 4 dargestellt.

Um ferner einen magnetischen Kurzschluß zwischen den zweiten Polschuhen 72 und dem ersten Polschuhträger 64 zu vermeiden, ist der erste Polschuhträger 64 in Bereichen zwischen den ersten Polschuhen 62 mit radial zur Achse 26 nach innen gezogenen Ausschnitten 65 versehen, so daß stets ein ausreichend großer Abstand zwischen dem ersten Polschuhelement 64 und dem dieses jeweils übergreifenden zweiten Polschuh 72 besteht.

Bei dem dargestellten Ausführungsbeispiel des erfindungsgemäßen Elektromotors ist vorzugsweise das Verbindungselement 68 zwischen dem ersten Polschuhträger 64 und dem zweiten Polschuhträger 74 als Hülse ausgebildet, die gleichzeitig einen Wickelkörper für die Spule 94 bildet, so daß die Spule 94 unmittelbar auf die Hülse 68 aufgewickelt ist und somit die Hülse 68 nicht nur den magnetischen Schluß zwischen dem ersten Polschuhträger 64 und dem zweiten Polschuhträger 74 darstellt, sondern gleichzeitig auch noch als Wickelkörper für die Spule 94 dient.

Um eine elektrische Isolation zwischen der Spule 94 und den Polschuhelementen 60, 70 mit ausreichender Durchschlagfestigkeit zu erreichen, sind die Außenfläche 86 der Hülse 68 sowie zumindest eine der Spule 94 zugewandte Seite 102 des ersten Polschuhträgers 64 sowie eine der Spule 94 zugewandte Seite 104 des zweiten Polschuhträgers 74 mit einer isolierenden Beschichtung 106 versehen, wie in Fig. 2 dargestellt.

Diese Beschichtung ist vorzugsweise eine Beschichtung mit einer Schichtdicke von weniger als 10 µm, noch besser eine Schichtdicke von weniger als 5 µm, die aufgrund ihrer glasartigen Konsistenz eine ausreichende elektrische Isolierung und Durchschlagfestigkeit gewährleistet. Vorzugsweise ist diese Beschichtung 106 eine sogenannte CVD-Quarz-Beschichtung.

Außerdem bietet die Beschichtung 106 den Vorteil, daß sie korrosionsschützend wirkt, so daß vorzugsweise die gesamten Polschuhelemente 60, 70 und das Verbindungselement im wesentlichen überall mit einer derartigen Beschichtung 106 versehen sind.

Zur Fixierung der Statoreinheiten 42, 44 an den Lagerträgern 14, 16 sind, wie in Fig. 2 am Beispiel des Lagerträgers 16 dargestellt, die Lagerträger 14, 16 mit einer Aufnahmehülse 110 versehen, welche in das als Hülse ausgebildete Verbindungselement 68 eingreift und damit die gesamte Statoreinheit 44 koaxial und präzise relativ zur Achse 26 aufnimmt. Darüber hinaus sind die Lagerträger 14, 16 noch mit einer Trägerplatte 112 versehen, welche an der dem ersten Polschuhträger 64 abgewandten Seite 90 des zweiten Polschuhträgers 74 anliegt.

Darüber hinaus ist zweckmäßigerweise auch der zweite Polschuhträger 74 im Bereich zwischen den Polschuhen 72 mit radial zur Achse 26 nach innen gezogenen Ausschnitten 75 versehen, in welche Nasen 114 der Trägerplatte 112 eingreifen, um den zweiten Polschuhträger 74 und somit die ganze Statoreinheit 44 drehfest bezüglich der Achse 26 an dem jeweiligen Lagerträger 14, 16 zu fixieren.

Bei dem erfindungsgemäßen Elektromotor sind die beiden Statoreinheiten 42, 44 so in das Gehäuse 10 eingesetzt, daß die Enden 63, 73 der jeweiligen Polschuhe 62, 72 einander zugewandt sind und somit auch die Räume 96 zur Aufnahme der Rotoreinheiten 52 und 54 einander zugewandt angeordnet sind.

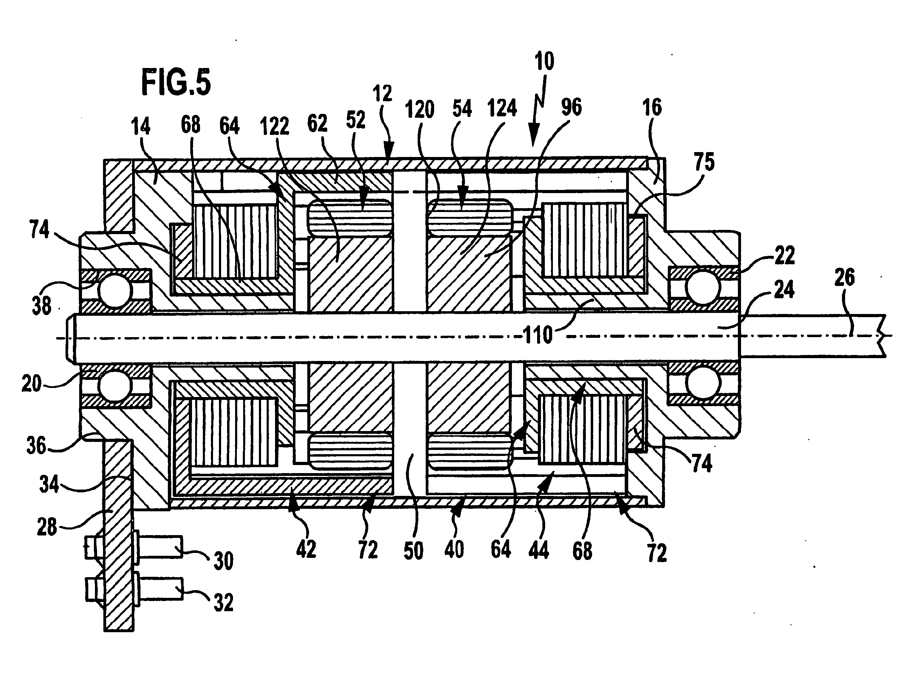

Damit besteht, wie in Fig. 1 dargestellt, die Möglichkeit, die Rotoreinheiten 52 und 54 in ein und demselben Rotorkörper 120 auszubilden, oder aber auch den Rotorkörper 120 zu teilen, so daß, wie im Zusammenhang mit einem zweiten Ausführungsbeispiel in Fig. 5 dargestellt, zwei in Richtung der Achse 26 aufeinanderfolgend angeordnete Rotorkörper 122 und 124 vorgesehen sind, die noch die Möglichkeit einer relativen Drehausrichtung zueinander eröffnen.

## Patentansprüche

1. Elektrische Maschine mit
einem Gehäuse (10), mit mindestens einem mit magnetisierten Bereichen versehenen und um eine Rotorachse (26) im Gehäuse (10) drehbar gelagerten Rotor (50), und
mit einem mindestens eine Statoreinheit (42, 44) aufweisenden Stator (40), wobei jede Statoreinheit (42, 44) zwei Polschuhelemente (60, 70) aufweist, von denen ein erstes Polschuhelement (60) einen sich quer zur Rotorachse (26) erstreckenden und auf einer dem Rotor (50) zugewandten Seite der Spule (94) angeordneten ersten Polschuhträger (64) sowie einen Satz mit diesen einstückig als Klauenpole ausgebildete erste Polschuhe (62) aufweist, welche sich von dem ersten Polschuhträger (64) weg in einer ersten Richtung (80) ungefähr parallel zur Rotorachse (26) erstrecken, und von denen ein zweites Polschuhelement (70) einen sich quer zur Rotorachse (26) erstreckenden und auf einer dem Rotor (50) abgewandten Seite der Spule (94) angeordneten zweiten Polschuhträger (74) sowie einen Satz mit diesem einstückig als Klauenpole ausgebildete zweite Polschuhe (72) aufweist, die sich ebenfalls in der ersten Richtung (80)vom zweiten Polschuhträger (74) weg ungefähr parallel zur Rotorachse (26) über den Rotor (50) hinweg erstrecken, wobei mit der in Richtung der Rotorachse (26) auf den Rotor (50) folgend angeordneten und um die Rotorachse (26) herum verlaufend, gewickelten Spule (94) die ersten und zweiten Polschuhe (62, 72) magnetisierbar sind,
**dadurch gekennzeichnet , dass** die elektrische Maschine ein Elektromotor ist und dass das erste Polschuhelement (60) ein einstückig an den ersten Polschuhträger (64) angeformtes und einen magnetischen Schluss zwischen den Polschuhträgern (64, 74) herstellendes Verbindungselement (68) trägt, welches mit dem zweiten Polschuhträger (74) durch Laserschweißen verschweißt ist.

2. Maschine nach Anspruch 1, **dadurch gekennzeichnet, dass** das Verbindungselement (68) durch Tiefziehen an den ersten Polschuhträger (64) angeformt ist.

3. Maschine an Anspruch 1 oder 2, **dadurch gekennzeichnet, dass** das Verbindungselement (68) als Hülse ausgebildet ist.

4. Maschine nach Anspruch 3, **dadurch gekennzeichnet, dass** die Hülse (68) einen Wickelkörper für die Spule (94) bildet.

5. Maschine nach einem der voranstehenden Ansprüche, **dadurch gekennzeichnet, dass** das Verbindungselement (68) und der erste Polschuhträger (64) auf ihrer der Spule (94) zugewandten Seite mit einer elektrisch isolierenden Beschichtung (106) versehen sind.

6. Maschine nach Anspruch 5, **dadurch gekennzeichnet, dass** der zweite Polschuhträger (74) auf seiner der Spule (94) zugewandten Seite mit einer elektrisch isolierenden Beschichtung (106) versehen ist.

7. Maschine nach Anspruch 5 oder 6, **dadurch gekennzeichnet, dass** die Beschichtung eine Dicke von weniger als 10 µm aufweist.

8. Maschine nach einem der Ansprüche 5 bis 7, **dadurch gekennzeichnet, dass** die Beschichtung (106) eine glasartige Konsistenz aufweist.

9. Maschine nach einem der voranstehenden Ansprüche, **dadurch gekennzeichnet, dass** die Polschuhelemente (60, 70) mit einer gegen Korrosion schützenden Beschichtung (106) versehen sind.

10. Maschine nach einem der voranstehenden Ansprüche, **dadurch gekennzeichnet, dass** die zweiten Polschuhe (72) die Spule (94) übergreifen.

11. Maschine nach einem der voranstehenden Ansprüche, **dadurch gekennzeichnet, dass** die ersten und zweiten Polschuhe (62, 72) auf derselben, um die Rotorachse (26) verlaufenden zylindrischen Fläche (82) liegen und dass die einen Polschuhe (62, 72) in Lücken der anderen Polschuhe (72, 62) angeordnet sind.

12. Maschine nach Anspruch 11, **dadurch gekennzeichnet, dass** in Azimutalrichtung um die Rotorachse (26) jeweils aufeinanderfolgend angeordnete Polschuhe (62, 72) identische Winkelabstände (WA) voneinander aufweisen.

13. Maschine nach Anspruch 12, **dadurch gekennzeichnet, dass** die ersten und zweiten Polschuhe (62, 72) sich in der ersten Richtung (80) so weit erstrecken, dass deren Enden (63, 73) in einer gemeinsamen senkrecht zur Rotorachse (26) verlaufenden Ebene (98) liegen.

14. Maschine nach einem der voranstehenden Ansprüche, **dadurch gekennzeichnet, dass** der zweite Polschuhträger (74) der Statoreinheit (42, 44) mit einem Lagerträger (14, 16) verbunden ist, welcher ein Drehlager (20, 22) für den Rotor (50) trägt.

15. Maschine nach Anspruch 14, **dadurch gekennzeichnet, dass** der Lagerträger (14, 16) mit einer Aufnahme (110) in das Verbindungselement (68) eingreift.

16. Maschine nach Anspruch 14 oder 15, **dadurch gekennzeichnet, dass** der Lagerträger (14, 16) aus Kunststoff ausgebildet ist.

17. Maschine nach einem der voranstehenden Ansprüche, **dadurch gekennzeichnet, dass** der Elektromotor einen Stator (40), zwei Statoreinheiten (42, 44) und einen Rotor (50) mit jeweils einer einer Statoreinheit (42, 44) zugeordneten Rotoreinheit (52, 54) aufweist, die auf einer gemeinsamen Motorwelle (24) sitzen.

18. Maschine nach Anspruch 17, **dadurch gekennzeichnet, dass** die Statoreinheiten (42, 44) so angeordnet sind, dass deren Polschuhe (62, 72) einander zugewandt sind.

19. Maschine nach Anspruch 17 oder 18, **dadurch gekennzeichnet, dass** bei beiden Statoreinheiten (42, 44) alle Polschuhe (62, 72) auf derselben zylindrischen Fläche (82) um die Rotorachse (26) herum angeordnet sind.

20. Maschine nach einem der Ansprüche 17 bis 19, **dadurch gekennzeichnet, dass** die beiden Statoreinheiten (42, 44) identisch ausgebildet sind.

21. Maschine nach einem der Ansprüche 17 bis 20, **dadurch gekennzeichnet, dass** durch magnetische Wirkung bedingte Haltestellungen der Rotoreinheiten (52, 54) relativ zu den diesen jeweils zugeordneten Statoreinheiten (42, 44) relativ zueinander um einen halben Polabstand (PA) verdreht sind.

## Claims

1. An electric machine comprising
a housing (10), comprising at least one rotor (50) provided with magnetized regions and mounted rotatably about a rotor axis (26) in the housing (10), and
comprising a stator (40) having at least one stator unit (42, 44), each stator unit (42, 44) having two pole shoe elements (60, 70) of which a first pole shoe element (60) has a first pole shoe carrier (64) which extends transversely with respect to the rotor axis (26) and is disposed on a side of the coil (94) facing towards the rotor (50), the pole shoe carrier (64) also having a set of first pole shoes (62) which are formed integrally with this pole shoe carrier (64) as claw poles and extend away from the first pole shoe carrier (64) in a first direction (80) approximately parallel to the rotor axis (26), and of which pole shoe elements (60, 70) a second pole shoe element (70) has a second pole shoe carrier (74) which extends transversely with respect to the rotor axis (26) and is disposed on a side of the coil (94) facing away from the rotor (50), the pole shoe carrier (74) also having a set of second pole shoes (72) which are formed integrally with this pole shoe carrier (74) as claw poles and also extend in the first direction (80) away from the second pole shoe carrier (74) approximately parallel to the rotor axis (26) beyond the rotor (50), the first and second pole shoes (62, 72) be magnetizable by means of the coil (94), which is positioned following the rotor (50) in the direction of the rotor axis (26) and with its windings arranged to encircle the rotor axis (26),
**characterized in that** the electrical machine is an electric motor and that the first pole shoe element (60) carries a connecting element (68) which is formed integrally onto the first pole shoe carrier (64) and establishes a magnetic circuit between the pole shoe carriers (64, 74), the connecting element being welded to the second pole shoe carrier (74) by laser welding.

2. A machine according to Claim 1, **characterized in that** the connecting element (68) is formed onto the pole shoe carrier (64) by means of deep drawing.

3. A machine according to Claim 1 or 2, **characterized in that** the connecting element (68) is formed as a sleeve.

4. A machine according to Claim 3, **characterized in that** the sleeve (68) forms a winding former for the coil (94).

5. A machine according to one of the preceding claims, **characterized in that** the connecting element (68) and the first pole shoe carrier (64) are provided with an electrically insulating coating (106) on the side thereof facing towards the coil (94).

6. A machine according to Claim 5, **characterized in that** the second pole shoe carrier (74) is provided with an electrically insulating coating (106) on the side thereof facing towards the coil (94).

7. A machine according to Claim 5 or 6, **characterized in that** the coating has a thickness of less than 10 µm.

8. A machine according to one of Claims 5 to 7, **characterized in that** the coating (106) has a glass-like consistency.

9. A machine according to one of the preceding claims, **characterized in that** the pole shoe elements (60, 70) are provided with a coating (106) which protects against corrosion.

10. A machine according to one of the preceding claims, **characterized in that** the second pole shoes (72) overlap the coil (94).

11. A machine according to one of the preceding claims, **characterized in that** the first and second pole shoes (62, 72) lie on the same cylindrical surface (82) which extends about the rotor axis (26) and that the one pole shoes (62, 72) are disposed in the gaps between the other pole shoes (72, 62).

12. A machine according to Claim 11, **characterized in that** the pole shoes (62, 72) disposed successively in an azimuthal direction around the rotor axis (26) have identical angular spacings (WA) from each other.

13. A machine according to Claim 13, **characterized in that** the first and second pole shoes (62, 72) extend so far in the first direction (80) that their ends (63, 73) lie in a common plane (98) running perpendicular to the rotor axis (26).

14. A machine according to one of the preceding claims, **characterized in that** the second pole shoe carrier (74) of the stator unit (42, 44) is connected to a bearing support (14, 16) which carries a rotary bearing (20, 22) for the rotor (50).

15. A machine according to Claim 14, **characterized in that** a receiving portion (110) of the bearing support (14, 16) engages into the connecting element (68).

16. A machine according to Claim 14 or 15, **characterized in that** the bearing support (14, 16) is made of plastics.

17. A machine according to one of the preceding claims, **characterized in that** the electric motor has a stator (40), two stator units (42, 44) and a rotor (50) having a respective rotor unit (52, 54) associated with each stator unit (42, 44), the rotor units being seated on a common shaft (24).

18. A machine according to Claim 17, **characterized in that** the stator units (42, 44) are arranged in such a way that their pole shoes (62, 72) face each other.

19. A machine according to Claim 17 or 18, **characterized in that** for both stator units (42, 44), all pole shoes (62, 72) are disposed on the same cylindrical surface (82) around the rotor axis (26).

20. A machine according to one of Claims 17 to 19, **characterized in that** both of the stator units (42, 44) are of identical construction.

21. A machine according to one of Claims 17 to 20, **characterized in that** holding positions of the rotor units (52, 54), determined by magnetic effect, relative to the stator units (42, 44) respectively associated with the rotor units, are rotationally displaced in relation to each other by half a pole space (PA).

## Revendications

1. Machine électrique comprenant
un boîtier (10), avec au moins un rotor (50) doté de zones magnétisées et logé de façon à pouvoir tourner autour d'un axe de rotor (26) dans le boîtier (10), et
un stator (40) présentant au moins une unité de stator (42, 44), chaque unité de stator (42, 44) présentant deux éléments de pièce polaire (60,70), dont un premier élément de pièce polaire (60) présente un premier support de pièce polaire (64) s'étendant transversalement à l'axe du rotor (26) et disposé sur un côté de la bobine (94) tourné vers le rotor (50) et un ensemble avec ces premières pièces polaires (62) conçues d'une seule pièce comme pôles à griffes, qui s'étendent à partir du premier support de pièce polaire (64) dans une première direction (80) à peu près parallèlement à l'axe du rotor (26), et dont un second élément de pièce polaire (70) présente un second support de pièce polaire (74) s'étendant transversalement à l'axe du rotor (26) et disposé sur un côté de la bobine (94) opposé au rotor (50) et un ensemble de secondes pièces polaires (72) réalisées d'une seule pièce avec ce support sous forme de pôles à griffes, lesquelles pièces polaires s'étendent également dans la première direction (80) à partir du second support de pièce polaire (74) à peu près parallèlement à l'axe du rotor (26) sur le rotor (50), les premières et secondes pièces polaires (62, 72) pouvant être magnétisées avec la bobine (94) enroulée, disposée en direction de l'axe du rotor (26) en suivant le rotor (50) et agencée autour de l'axe du rotor (26).
**caractérisée en ce que** la machine électrique est un moteur électrique et **en ce que** le premier élément de pièce polaire (60) porte un élément de liaison (68) formé d'une seule pièce sur le premier support de pièce polaire (64) et établissant une fermeture magnétique entre les supports de pièce polaire (64, 74), lequel élément est soudé par soudage au laser avec le second support de pièce polaire (74).

2. Machine selon la revendication 1, **caractérisée en ce que** l'élément de liaison (68) est formé par emboutissage profond sur le premier support de pièce polaire (64).

3. Machine selon la revendication 1 ou 2, **caractérisée en ce que** l'élément de liaison (68) est conçu comme une douille.

4. Machine selon la revendication 3, **caractérisée en ce que** la douille (68) forme un corps d'enroulement pour la bobine (94).

5. Machine selon l'une quelconque des revendications précédentes, **caractérisée en ce que** l'élément de liaison (68) et le premier support de pièce polaire (64) sont dotés sur leur côté tourné vers la bobine (94) d'un revêtement (106) électro-isolant.

6. Machine selon la revendication 5, **caractérisée en ce que** le second support de pièce polaire (74) est doté sur son côté tourné vers la bobine (94) d'un revêtement (106) électro-isolant.

7. Machine selon la revendication 5 ou 6, **caractérisée en ce que** le revêtement présente une épaisseur de moins de 10 µm.

8. Machine selon l'une quelconque des revendications 5 à 7, **caractérisée en ce que** le revêtement 106 présente une consistance de type verre.

9. Machine selon l'une quelconque des revendications précédentes, **caractérisée en ce que** les éléments de pièce polaire (60, 70) sont dotés d'un revêtement (106) protégé contre la corrosion.

10. Machine selon l'une quelconque des revendications précédentes, **caractérisée en ce que** les secondes pièces polaires (72) recouvrent la bobine (94).

11. Machine selon l'une quelconque des revendications précédentes, **caractérisée en ce que** les premières et secondes pièces polaires (62, 72) sont disposées sur la même surface (82) cylindrique agencée autour de l'axe du rotor (26) et **en ce que** les pièces polaires (62, 72) sont disposées dans des vides des autres pièces polaires (72, 62).

12. Machine selon la revendication 11, **caractérisée en ce que** des pièces polaires (62, 72) disposées dans le sens azimutal autour de l'axe du rotor (26) en se suivant présentent des distances angulaires (WA) identiques les unes par rapport aux autres.

13. Machine selon la revendication 12, **caractérisée en ce que** les premières et secondes pièces polaires (62, 72) s'étendent dans la première direction (80) de telle sorte que leurs extrémités (63, 73) sont disposées dans un plan (98) commun agencé perpendiculairement à l'axe du rotor (26).

14. Machine selon l'une quelconque des revendications précédentes, **caractérisée en ce que** le second support de pièce polaire (74) de l'unité de stator (42, 44) est relié à un support de palier (14, 16) qui porte un palier rotatif (20, 22) pour le rotor (50).

15. Machine selon la revendication 14, **caractérisée en ce que** le support de palier (14, 16) s'engage avec un logement (110) dans l'élément de liaison (68).

16. Machine selon la revendication 14 ou 15, **caractérisée en ce que** le support de palier (14, 16) est réalisé en plastique.

17. Machine selon l'une quelconque des revendications précédentes, **caractérisée en ce que** le moteur électrique présente un stator (40), deux unités de stator (42, 44) et un rotor (50) avec respectivement une unité de rotor (52, 54) attribuée à une unité de stator (42, 44), lesquelles sont situées sur un arbre de moteur (24) commun.

18. Machine selon la revendication 17, **caractérisée en ce que** les unités de stator (42, 44) sont disposées de telle sorte que leurs pièces polaires (62, 72) sont tournées les unes vers les autres.

19. Machine selon la revendication 17 ou 18, **caractérisée en ce que**, sur les deux unités de stator (42, 44), toutes les pièces polaires (62, 72) sont disposées sur la même surface (82) cylindrique autour de l'axe du rotor (26).

20. Machine selon l'une quelconque des revendications 17 à 19, **caractérisée en ce que** les deux unités de stator (42, 44) sont réalisées de façon identique.

21. Machine selon l'une quelconque des revendications 17 à 20, **caractérisée en ce que** des positions de retenue, conditionnées par un effet magnétique, des unités de rotor (52, 54) par rapport aux unités de stator (42, 44) attribuées respectivement à ces unités sont tournées les unes par rapport aux autres d'un demi-espace polaire (PA).
